Europäisches Patentamt

European Patent Office

Office européen des brevets

(19)

(11) Publication number : **0 271 846 B1**

(12) EUROPEAN PATENT SPECIFICATION

(45) Date of publication of patent specification :
05.04.95 Bulletin 95/14

(51) Int. Cl.⁶ : **H04N 11/04**

(21) Application number : 87118427.1

(22) Date of filing : 12.12.87

(54) **System and circuitry for television signal processing.**

(30) Priority : 17.12.86 IT 2271786

(43) Date of publication of application :
22.06.88 Bulletin 88/25

(45) Publication of the grant of the patent :
05.04.95 Bulletin 95/14

(84) Designated Contracting States :
AT BE CH DE ES FR GB LI NL SE

(56) References cited :
US-A- 3 071 727
US-A- 4 106 053
ICC'79, CONFERENCE RECORD, Boston,
10th-14th June 1979, vol. 2 of 4, pages
23.5.1-23.5.5, IEEE, Boston, US; L. CHIARIG-
LIONE et al.: "Transform coding of palcompo-
site signals"
IEE PROCEEDINGS SECTION AAI, vol. 129, no.
7, part A, September 1982, pages427-435, Old
Woking, Surrey, GB; W.G. SIMPSON: "Digital
television networks"

(73) Proprietor : ALCATEL ITALIA Società per
Azioni
Via Monte Rosa, 15
I-20149 Milano (IT)

(72) Inventor : Cucchi, Silvio
Via S. Invenzio 9
I-20080 Gaggiano (MI) (IT)
Inventor : Modena, Marco
Via Teocrito 36
I-20052 Milano (IT)
Inventor : Peruta, Roberto
Via Avogadro 7
I-24036 Ponto S. Pietro (BG) (IT)

(74) Representative : Hoffmeister, Helmut, Dr.
Dipl.-Phys.
Patentanwalt
Goldstrasse 36
D-48147 Münster (DE)

EP 0 271 846 B1

## Description

This invention concerns to a method processing colour television signals with amplitude modulation encoded chrominance information. Colour television signals (e.g. PAL or NTSC) are generally unsuitable for encoding through unidimensional or bidimensional high efficiency transform.

Although it is possible to apply a unidimensional or bidimensional transform to a PAL or NTSC-television signal, two disadvantages are being met:
- Spreading of energy over a high number of coefficients occurs when transforming base band signals;
- limitations on the dimensions of the transform or, alternatively, lack of connection between the image geometry and the block on which the transform operates.

A composite television signal is expressed by the following formula:

$$s(t) \ = \ y(t) + c1(t) \cdot \cos(2\pi \cdot Fsc \cdot t) + c2(t) \cdot \sin(2\pi \cdot Fsc \cdot t) \quad (1)$$

where:

| | |
|---|---|
| $y(t)$ : | luminance signal |
| $c1(t)$, $c2(t)$ : | chrominance signals |
| $\pi$ : | pi constant |
| $Fh$ : | line frequency |
| $Fsc$ : | chrominance subcarrier frequency (equalling $(1135/4 + 1/625) \cdot Fh$ for PAL and $455/2 \cdot Fh$ for NTSC) |

In the presence of uniform images signals y, c1, c2 are constant, which does not occur for signal s(t) because modulation introduces an alternating current component.

Consequently, when applying the transform to the composite signal, a large number of non-zero coefficients will arise also for constant images, and the compression efficiency is much lower as compared to the case in which the transformed signals are base band signals y(t), c1(t), c2(t).

The problem may be solved by inserting a demodulator between the signal source and the converter. In this way, compression efficiency improves, but the signal quality considerably degrades, while costs increase due to the demodulation and remodulation circuitry.

This invention provides a method for processing composite colour television signals having amplitude modulation encoded chrominance information comprising chrominance signals **c1** and **c2** and a baseband component comprising a luminance signal **y**, said method permitting the encoding of said colour television signals through a unidimensional or bidimensional transform, said method being characterized by the following steps:
(a) conversion from analog to digital and generating of samples of said composite colour television signal in conjunction with a variable frequency sampling clock [(frequency ck(t)],
(b) a variable sampling frequency [ck(t)] for the clock is chosen for the composite colour television signal (SAI), so as to obtain a number of samples ($s_n$) per television line which is a multiple of the dimension of the transform;
(b) periodically transforming of the samples by arithmetic operations thereby converting them into a pseudo luminance signal **py** and pseudo chrominance signals **pc1** and **pc2** which are correlated to, but are otherwise different to said composite signals **y**, **c1** and **c2**.

Prior Art is discussed as follows:

US-A 4 541 008 discloses the use of a component separation for the sampled digital values of the signal. The coding is performed separately for each single component. This known method has at least three drawbacks:
a) it is expensive;
b) it is very complex;
c) it is not fully transparent.

Signals are coded and decoded several times. The quality of the signal will degrade.

US-A 4 541 008 takes the radio signal of the NTSC norm US-A 4 541 008 the radio signal of the NTSC norm and separates or demodulates it obtaining Y, I and Q. In the present method, however, a demodulation or separation is not involved and is not a demodulation as demonstrated by the fact that the same equations are utilized for NTSC signals a well as for PAL video signals. The system of US-A 4 541 008 is only able to receive NTSC. To receive a PAL signal said system mustchange the receiver. The method of the present system is able to receive any video signal (NTSC, PAL, etc.) and does not need to change the receiver when changing signals.

The present method basically will separate the "Low Frequency Signal Components (LFSC)" from the "High Frequency Signal components (HFSC)" and further separating the HFSC into two signals, of which one is in quadrature to the other. This separation is performed without enganging the colour subcarrier phase.

These and other features of the invention will become apparent when the following text is read in conjunction with the accompanying drawings in which:

Fig. 1        is a system block diagram of the invention;
Fig. 2a       is a circuit schematic of the control signal generator;
Fig. 2b       is a circuit schematic of the variable frequency clock generator and the A/D converter of the present invention; and
Fig. 3        is a circuit schematic of the PAL signal processor of the present invention.

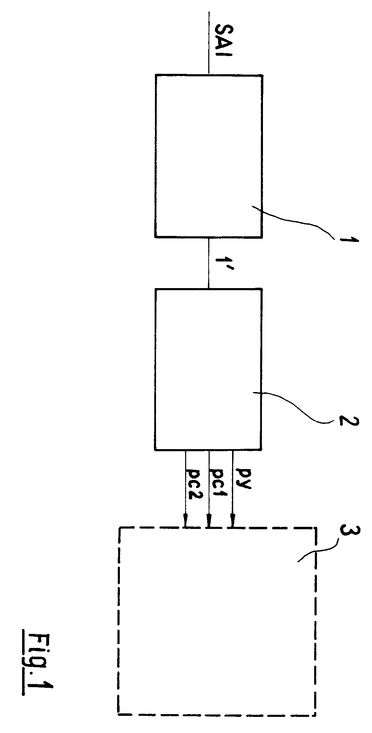

Fig. 1 shows the block diagram of the processing system where an analog signal (SAI) is applied to block 1, which, according to the invention, consists of a variable clock generator and an analog to digital converter, the output of which feeds a digital processor PRO which in turn supplies three processed signals py, pc1, pc2 to block 3, which is a "Redundancy Reducing System".

Hence, the processing system of the invention consists of two parts:
- the first part (1) where analog to digital conversion is performed by adopting a critically variable sampling frequency;
- the second part (2) where through a well determined processing, the so-sampled input signal is transformed into three signals py, pc1, pc2 having similar statistical characteristic like signals y, c1, c2.

Hereafter it will be explained that this part of the processing system of the invention can be fully inverted and does not introduce errors and the signal quality does not degrade.

## First part

According to the invention sampling clock ck(t) of the analog input signal SAI must respect two prime bonds or conditions:

a) its frequency must be equal (or very close) to NxFsc, where N is an integer.

b) It must generate a number of samples, per line, multiple of the adopted transform.

A general solution satisfying above bonds a) and b) consists in adopting two different sampling frequencies, one for the active part of the video signal and one for the line synchronism part, complying with Nyquist's criterion on the single portions of the composite signal.

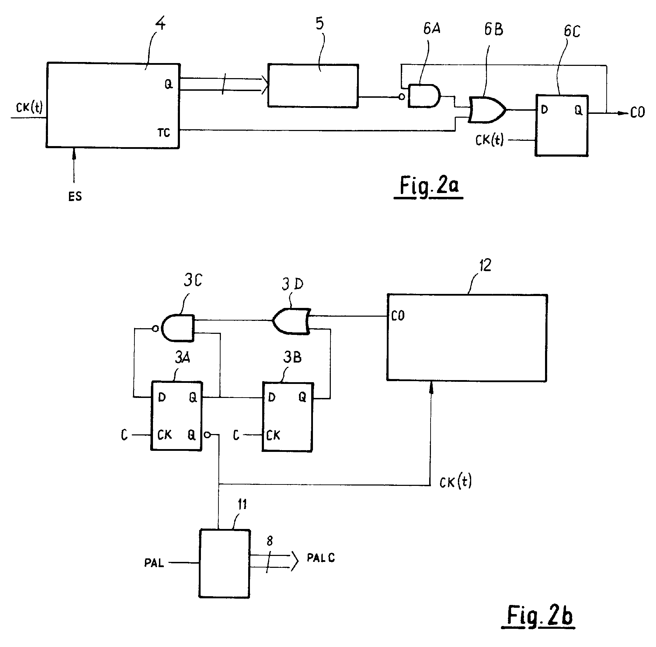

For the sake of clearness a PAL signal can be taken as an example (see figures 2a and 2b).

In analog to digital converter 11 the PAL signal is sampled with variable frequency clock ck(t) (obtained from the circuit of Fig. 2b) as a function of the signal spectrum content: in the active area, where the spectrum contains more energy sampling signal ck(t) reaches the maximum frequency ckmax.

In case of line blanking ck(t) has a minimum frequency ckmin. So Nyquist's criterion is satisfied anyway.

Therefore it is possible to obtain a number of samples per line (in this case e.g. 1120) multiple of the dimension of the transform, which for this example has been given dimension 8.

Clock master C (see Fig. 2b) has e.g. frequency 2270xFh.

Variable frequency sampling clock ck(t) is generated by said circuit of Fig. 2b containing a control signal generator 12 (see Fig. 2a) and a sequential network consisting of flip-flop 3A and 3B, NAND gate 3C and OR gate 3D, which together generate a variable frequency clock signal ck(t), dividing in this case input frequency C by two or by three.

In every TV line this circuit generates 1090 clock strokes at maximum frequency ckmax (equalling 2270xFh/2) and 30 clock strokes at minimum frequency ckmin (equalling 2270xFh/3) = 1120 totally.

Control circuit 12 of Fig. 2b is shown in detail in Fig. 2a. It consists of counter 4, decoder 5, flip-flop 6C and gates 6A and 6B.

Circuit 12 is slave of external signal ES in phase relationship with the TV synchronisms.

For making counter 4 to be in phase with signal ES, the following strategy is to be operated. Conventionally, in correspondence with a certain position of the video line a rising edge is generated by means of a circuit extracting the horizontal frequency.

Since said rising edge is subject to jitter, still conventionally, a time slot wherein said rising edge must be present, is previewed.

Once counter 4 has been phase locked to signal ES, control signal CO is produced at the output of 6C.

As already stated, in this embodiment of the invention this is performed by the circuit shown in Fig. 2a, which consists of counter modulus 1120 (block 4), decoder 5 generating a pulse the duration of which equals one clock stroke when counter 4 reaches "30", two gates 6A and 6B and flip-flop 6C.

In the examplified case, sampling frequency ck(t) chosen for the active portion of the composite signal is rather close to 4xFsc, so the samples obtained are type:

$$s(KT) = y(KT) + u(KT)\cdot\cos(2\pi\cdot Fsc\cdot KT) + v(KT)\cdot\sin(2\pi\cdot Fsc\cdot KT) \quad (2)$$

with T=1/(1135xFh) (the usual notation of encoded signals PAL viz. c1 - - u, c2 - - v has been adopted).

By inserting the value of Fsc equation (3) is achieved:

$$s(KT) = y(KT) + u(KT)\cdot\cos[K\cdot\tfrac{1}{2}\pi + K\cdot 2\pi/(1135\cdot 625)] + v(KT)\cdot\sin[K\cdot\tfrac{1}{2}\pi + K\cdot 2\pi/(1135\cdot 625) \quad (3)$$

## Second part

The arithmetic operations permit to obtain, e.g. still in the case where system input signal SAI of Fig. 1 is PAL the signals py, pc1, pc2 from 3).

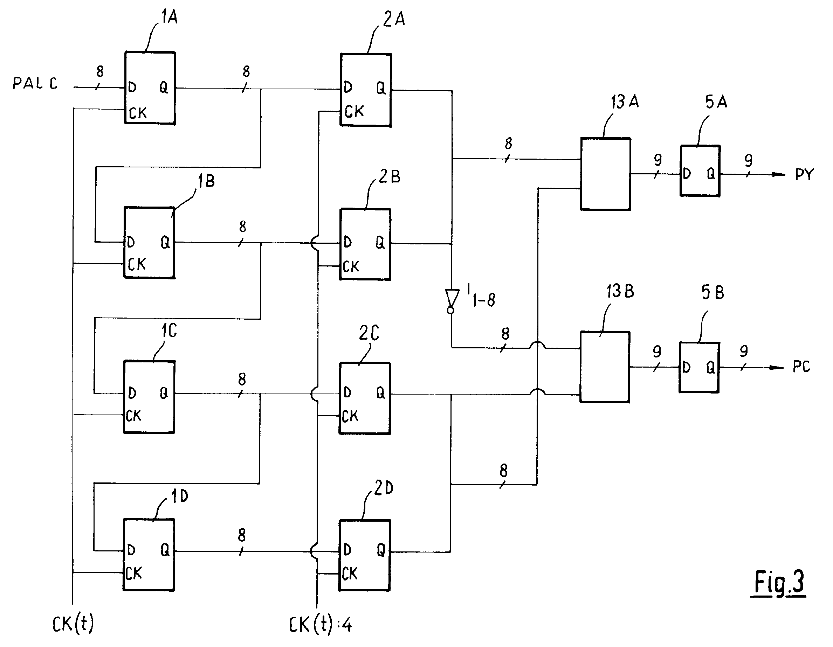

Processor PRO of Fig. 3 processes four consecutive samples s1, s2, s3, s4 as follows:

$$py1 = s1 + s3 \qquad pc1 = s1 - s3$$
$$py2 = s2 + s4 \qquad pc2 = s2 - s4 \quad (4)$$

Unless there is an error (to be considered negligible) due to phase Kx2PI/(1135x625) py signals are proportional to the mean value of signal (y(t)), pc signals define the amplitude and phase of the alternating current component.

This processing procedure is repeated on the quartets that follow.

Since py is proportional to mean signal y(t) it has the same spectrum characteristics of luminance as the component signal, less an aliasing chrominance error. Signals pc1, pc2 have spectrum characteristics which are linearly dependent on the hrominance components of the component signal (u,v in case of PAL) vs sampling with respect tc the coloured subcarrier.

As already stated, this operation can be completely reversed.

The initial signals are again obtained at the receiving end with the following formula:

$$s1 = (py1 + pc1)/2 \qquad s3 = (py1 - pc1)/2$$
$$s2 = (py2 + pc2)/2 \qquad s4 = (py2 - pc2)/2 \quad (5)$$

The PRO circuit, shown in the block diagram of Fig. 3, consists of four cascaded 8-bit registers 1A, 1B, 1C and 1D, other four 8-bit registers 2A, 2B, 2C and 2D each one of which is parallel connected to one of registers 1, eight inverters I1 to I8, two 8-bit adders 13A and 13B and two 9-bit registers 5A and 5B at the output.

The NTSC signal processing procedure is similar to the one for the PAL signal. The difference lies in clock master frequency C, which is 1820xFh.MHz and in the number of clock strokes at one half and one third frequency, viz. 868 and 28, respectively.

It is still to be said that in view of the fact that bidimensional transforms are to be realized, it is necessary to compensate for phase rotations that take place from one line to the other. In case of PAL the chrominance carrier rotates by 90° and component V changes sign.

The first phenomenon mutually exchanges the significance of output signals pc1 and pc2. This can be remedied by changing the sequence in which they are sent to the transformer.

The second phenomenon generates a vertical axis modulation, the effects of which can only be attenuated by multiplying -1 time signals pc1 and pc2 on a part of the lines, i.e. pc1 and pc2 are unaltered on lines 1, 2, inverted on lines 3, 4 and become again unaltered on lines 5, 6 etc.

Instead, as far as the NTSC standard is concerned, the phase rotation from one line to the other is 180° and is compensated by multiplying -1 time signals pc1 and pc2 on alternating lines.

## Claims

1. A method for processing composite colour television signals having amplitude modulation encoded chrominance information comprising chrominance signals **c1** and **c2** and a baseband component comprising a luminance signal **y**, said method permitting the encoding of said colour television signals through a unidimensional or bidimensional transform, said method being characterized by the following steps:

   (a) conversion from analog to digital and generating of samples of said composite colour television signal in conjunction with a variable frequency sampling clock [(frequency ck(t)],

   (b) a variable sampling frequency [ck(t)] for the clock is chosen for the composite colour television signal (SAI), so as to obtain a number of samples ($s_n$) per television line which is a multiple of the dimension of the transform;

   (c) periodically transforming of the samples by arithmetic operations thereby converting them into a pseudo luminance signal **py** and pseudo chrominance signals **pc1** and **pc2** which are correlated to, but are otherwise different to said composite signals **y**, **c1** and **c2**.

2. A method according to claim 1, characterized in that the colour television signal (SAI) to be processed consists of a base band component and a pass band component, said pass band component being obtained from amplitude modulation encoding of one or more of said base band signals, wherein three base band signals are obtained by sampling at a frequency equalling N times the carrier frequency, followed by adding and subtraction on the samples.

3. A method according to claim 2, characterized in that the variable sampling frequency [ck(t)] is always greater than twice the bandwidth of the colour television signal.

4. A method according to claim 3, characterized in that the variable sampling frequency [ck(t)] of said variable frequency clock has only two preestablished values.

5. Circuit adapted for carrying out the method claimed in at least one of the claims 1 - 4, comprising at least one variable clock generator (1) and an analog to digital converter, and a digital processor (PRO) consisting of:
(I) four cascaded registers (1 A, B, C, D),
(II) four further registers (2 A, B, C, D), each connected in parallel to one of said four cascaded registers,
(III) eight inverters (I 1 to I 8) connected to two of said further registers,
(IV) two adders (13 A, 13 B), one of said two adders connected directly to all four of said further registers, the other of said adders connected directly to two of said further registers and to said eight inverters to the other two of said further registers, and
(V) two output registers (5A, 5B) each connected to one of said two adders.

## Patentansprüche

1. Verfahren zur Bearbeitung zusammengesetzter Farb-Fernsehsignale, die eine Chrominanz-Information besitzen, die in einer Amplituden-Modulation codiert sind, umfassend Chrominanz-Signale c1 und c2 und eine Grundband-Komponente, die ein Leuchtdichte-Signal y enthält, wobei das Verfahren das Codieren der genannten Farb-Fernsehsignale durch eine eindimensionale oder zweidimensionale Transformation erlaubt und durch folgende Schritte gekennzeichnet ist:
(a) Umwandlung von analog zu digital und Erzeugen von Abtastwerten des genannten zusammengesetzten Farb-Fernsehsignals in Verbindung mit einem variablen Frequenz-Abtastwerttaktgeber [(Frequenz ck(t)],
(b) Wahl einer variablen Abtastfrequenz [ck(t)] des Taktgebers für das zusammengesetzte Farb-Fernsehsignal (SAI), so daß eine Reihe von Abtastwerten ($s_n$) pro Fernsehzeile erhalten wird, die ein Vielfaches der Transformationsdimension ist,
(c) periodisches Transformieren der Abtastwerte durch arithmetische Operationen, wobei die Abtastwerte in ein Pseudo-Leuchtdichte-Signal py und in Pseudo-Chrominanz-Signale pc1 und pc2 umgeformt werden, die korreliert sind mit, aber im übrigen zu den zusammengesetzten Signalen y, c1 und c2 differieren.

2. Verfahren nach Anspruch 1, dadurch gekennzeichnet, daß das zu bearbeitende Farb-Fernsehsignal (SAI) aus einer Basis-Bandkomponente und einer Durchlaß-Bandkomponente besteht, wobei die Durchlaß-Bandkomponente aus der Codierung der Amplituden-Modulation eines oder mehrerer Basis-Bandsignale erhalten wird, während drei Basis-Bandsignale erhalten werden durch Abtastung bei einer Frequenz, die gleich dem N-fachen der Trägerfrequenz ist, gefolgt von einem Addieren und Subtrahieren der Abtastwerte.

3. Verfahren nach Anspruch 2, dadurch gekennzeichnet, daß die variable Abtastfrequenz [ck(t)] immer größer ist als das Zweifache der Bandbreite des Farb-Fernsehsignals.

4. Verfahren nach Anspruch 3, dadurch gekennzeichnet, daß die variable Abtastfrequenz [ck(t)] des variablen Frequenztaktgebers nur zwei voreingestellte Werte besitzt.

5. Schaltkreis, geeignet zur Ausführung des Verfahrens gemäß wenigstens einem der Ansprüche 1 bis 4, umfassend wenigstens einen variablen Taktgenerator (1) und einen Analog-Digital-Konverter sowie einen Digital-Prozessor (PRO), bestehend aus:
(I) vier in Kaskade geschalteten Registern (1 A, B, C, D)
(II) vier weiteren Registern (2 A, B, C, D), jedes zueinander parallel angeordnet, mit einem der in vier in Kaskade geschalteten Registern verbunden,

(III) acht Invertern (I 1 bis I 8) verbunden mit zwei der weiteren Registern,

(IV) zwei Addern (13 A, 13 B), von denen einer direkt mit allen vier der genannten weiteren Registern verbunden ist und der andere direkt mit zwei der weiteren Register verbunden ist und über die acht weiteren Invertoren mit den anderen zwei der der genannten weiteren Register, und

(V) zwei Ausgangsregistern (5A, 5B), die jeweils mit den zwei Addern verbunden sind.


**Revendications**

1. Procédé de traitement de signaux composites de télévision en couleur présentant une information de chrominance codée par modulation d'amplitude comprenant des signaux de chrominance c1 et c2 et une composante de bande de base comprenant un signal de luminance y, ledit procédé permettant le codage desdits signaux de télévision en couleur par l'intermédiaire d'une transformée unidimensionnelle ou bidimensionnelle ledit procédé étant caractérisé par les étapes suivantes:

(a) conversion analogique vers numérique et production d'échantillons dudit signal composite de télévision en couleur en relation avec une horloge d'échantillonnage à fréquence variable [(fréquence ck(t))],

(b) choix d'une fréquence d'échantillonnage variable [ck(t)] de l'horloge pour le signal composite de télévision en couleur (SAI), de façon à obtenir un nombre d'échantillons ($s_n$) par lignes de télévision qui soit un multiple de la dimension de la transformée;

(c) transformation de façon périodique des échantillons par des opérations arithmétiques, les convertissant par ce moyen en un second signal de luminance py et pseudo-signaux de chrominance pc1 et pc2 qui sont corrélés avec lesdits signaux composites y, c1 et c2, mais sont par ailleurs différents de ceux-ci.

2. Procédé selon la revendication 1, caractérisé en ce que le signal de télévision en couleur (SAI) à traiter consiste en une composante de bande de base et une composante de bande réduite, ladite composante de bande réduite étant obtenue par le codage en modulation d'amplitude de l'un ou de plusieurs desdits signaux de bande de base, dans lequel trois signaux de bande de base sont obtenus par échantillonnage à une fréquence correspondant à N fois la fréquence porteuse, suivi par addition et soustraction des échantillons.

3. Procédé selon la revendication 2, caractérisé en ce que la fréquence d'échantillonnage variable [ck(t)] est toujours supérieure au double de la largeur de bande du signal de télévision en couleur.

4. Procédé selon la revendication 3, caractérisé en ce que la fréquence d'échantillonnage variable [ck(t)] de ladite horloge à fréquence variable dispose de seulement deux valeurs pré-établies.

5. Circuit conçu pour la mise en oeuvre du procédé selon l'une au moins des revendications 1 à 4, comprenant au moins un générateur d'horloge variable (1) et un convertisseur analogique vers numérique, et un processeur numérique (PRO) consistant en:

(I) quatre registres en cascade (1A, B, C, D),

(II) quatre autres registres (2A, B, C, D), chacun étant relié en parallèle à l'un desdits quatre registres en cascade,

(III) huit inverseurs (I1 à I8) reliés à deux desdits autres registres,

(IV) deux circuits d'addition (13A, 13B), l'un desdits deux circuits d'addition étant reliés directement à l'ensemble desdits quatres autres registres, l'autre desdits circuits d'addition étant reliés directement à deux desdits autres registres et auxdits huit inverseurs vers les deux autres desdits autres registres, et

(V) deux registres de sortie (5A, 5B) relié chacun à l'un desdits deux circuits d'addition.

SAI

1'

1

2

pc2
pc1
py

3

Fig.1

7

Fig. 2a

Fig. 2b

Fig.3